Europäisches Patentamt

European Patent Office

Office européen des brevets

(11) Veröffentlichungsnummer : **0 184 818**
B1

(12) EUROPÄISCHE PATENTSCHRIFT

(45) Veröffentlichungstag der Patentschrift :
05.04.89

(51) Int. Cl.⁴ : **B 23 B 27/16**

(21) Anmeldenummer : **85115684.4**

(22) Anmeldetag : **10.12.85**

(54) Schneidhalter für Schneidplatten.

(30) Priorität : **13.12.84 DE 3445423**

(43) Veröffentlichungstag der Anmeldung :
**18.06.86 Patentblatt 86/25**

(45) Bekanntmachung des Hinweises auf die Patenterteilung : **05.04.89 Patentblatt 89/14**

(84) Benannte Vertragsstaaten :
**AT BE CH DE FR GB IT LI LU NL SE**

(56) Entgegenhaltungen :
AT–B– 349 851
DE–B– 1 402 937
DE–B– 2 210 816
FR–A– 2 465 543
GB–A– 2 086 273

(73) Patentinhaber : **Feldmühle Aktiengesellschaft
Fritz-Vomfelde-Platz 4
D-4000 Düsseldorf 11 (DE)**

(72) Erfinder : **Kraft, Harald, Dipl.-ing.
Aspachstrasse 9
D-7336 Uhingen (DE)**
Erfinder : **Eder, Otto
Hermann-Hesse-Weg 7
D-7316 Köngen (DE)**

**Beschreibung**

Die Erfindung betrifft einen Schneidhalter für Schneidplatten, insbesondere Wendeschneidplatten, der aus einem Schaft und einer in dessen Kopf eingebrachten Ausnehmung zur Aufnahme der Schneidplatte besteht, wobei die Ausnehmung eine Grundfläche und zwei im Winkel zueinander angeordnete Seitenflächen zur Positionierung der Schneidplatte aufweist, eine der beiden Seitenflächen gegenüber der anderen drehbar angeordnet und durch ein Kreisabschnittstück gebildet ist, das in einer kreisabschnittförmigen Aussparung des Kopfes angeordnet ist.

Schneidhalter mit drehbar angeordneten Seitenflächen sind aus der DE-B-2 210 816 und der GB-A-2 086 273 bekannt, sie sind jedoch aufwendig in der Herstellung und in der Bedienung und erfordern relativ enge Toleranzen bei der Herstellung von Schneidhalter und Schneidplatte.

Schneidhalter sind ebenso wie Schneidplatten Massenerzeugnisse, d. h., daß man bestrebt ist, vorgegebene Toleranzen einzuhalten, wobei von Seiten der Fertigung möglichst grobe Toleranzen gewünscht werden, da diese leichter einzuhalten sind, von Seiten der Anwendung in vielen Fällen sehr enge Toleranzen gefordert werden. Der vorliegenden Erfindung liegt damit die Aufgabe zugrunde, einen Schneidhalter zu schaffen, der mit gröberen Toleranzen gefertigt werden kann, trotzdem aber eine einwandfreie Anlage der Schneidplatte an den Seitenflächen der Ausnehmung im Kopf des Schneidhalters ermöglicht.

Diese Aufgabe wird gelöst durch einen Schneidhalter für Schneidplatten, insbesondere Wendeschneidplatten, der aus einem Schaft und einer in dessen Kopf eingebrachten Ausnehmung zur Aufnahme der Schneidplatte besteht, wobei die Ausnehmung eine Grundfläche und zwei im Winkel zueinander angeordnete Seitenflächen zur Positionierung der Schneidplatte aufweist, eine der beiden Seitenflächen gegenüber der anderen drehbar angeordnet und durch ein Kreisabschnittstück gebildet ist, das in einer kreisabschnittförmigen Aussparung des Kopfes angeordnet ist, mit dem kennzeichnenden Merkmal, daß der Zylindermantel des Kreisabschnittstückes eine Freifläche aufweist, die gegenüber seiner Sehne angeordnet ist.

Die Erfindung sieht vor, daß der Zylindermantel des Kreisabschnittstückes eine Freifläche aufweist, die gegenüber seiner Sehne, die mit der eingesetzten Schneidplatte in Eingriff steht, angeordnet ist.

Durch die Anordnung dieser Freifläche im rückwärtigen Bereich des Kreisabschnittstückes wird dessen Anlagefläche reduziert und damit die Reibung verringert, so daß sich das Kreisabschnittstück leichter der Lage der Schneidplatte anpaßt. Wesentlich ist außerdem, daß dadurch Toleranzen ausgeglichen werden, die bei Bearbeitung der Mantelfläche des Kreisabschnittstückes und der kreisabschnittförmigen Aussparung auftreten.

Beim Einlegen der Schneidplatte in die Ausnehmung wird die Schneidplatte mit einem gewissen Druck von Hand in die Ausnehmung eingeführt. Sie liegt dabei an der starren Seitenfläche an, während sich die drehbar angeordnete Seitenfläche durch den Andruck automatisch justiert. Selbstverständlich muß die drehbare Seitenfläche die ihr zugewandte Anlagefläche der Schneidplatte nicht voll berühren. Es reicht vollkommen, wenn das in Teilbereichen geschieht. Gemäß einer besonders bevorzugten Ausgestaltung der Erfindung ist es möglich, daß diese drehbare Seitenfläche mit zwei Ansätzen versehen ist und lediglich diese beiden Ansätze mit der Anlageseite der Schneidplatte in Eingriff stehen. Durch diese Ausgestaltung ist es möglich, auch Schneideinsätze zu zentrieren, die ballig sind oder die Form eines Vielkantes, also mehr als vier Seitenflächen, aufweisen. In diesem Fall greifen die beiden Ansätze an unterschiedlichen Seitenfläche an, so daß in Verbindung mit der einen starren Seitenfläche eine saubere Positionierung der Schneidplatte erreicht wird.

Die drehbare Seitenfläche ist durch ein Kreisabschnittstück gebildet, das in einer kreisabschnittförmigen Aussparung des Kopfes angeordnet ist. Das Kreisabschnittstück weist dabei, bei im wesentlichem gleichem Radius wie die kreisabschnittförmige Aussparung, eine größere Höhe auf als die Höhe der kreisabschnittförmigen Aussparung. Durch einfaches Einbringen einer Ausfräsung in eine der Seitenflächen, die zur Positionierung der Schneidplatte dienen und Einlage eines Kreisabschnittstückes in diese Seitenfläche, ist es mit ganz geringem Aufwand möglich, eine starre Seitenfläche in eine drehbare zu verwandeln. Eine herkömmliche Halterkonstruktion muß nur mit einem Scheibenfräser kleinen Durchmessers bearbeitet werden. Dieser Fräser muß oberhalb der Grundfläche der Ausnehmung in eine Seitenfläche eingefahren werden, wobei in diese Ausfräsung, die nach oben, also zur Oberfläche des Kopfes des Schneidhalters hin sowohl offen als auch abgedeckt sein kann, eine Scheibenfeder mit rückwärtiger Freifläche eingesetzt wird.

Eine vorteilhafte Ausgestaltung der Erfindung sieht vor, daß das Kreisabschnittstück mit einem Ansatz versehen ist. Dieser Ansatz befindet sich im oberen Drittel der Höhe der Seitenflächen, greift also auch nur im oberen Drittel der Schneidplatte an, so daß im unteren Bereich ein Freiraum vorhanden ist, wodurch die untere Kante der Schneidplatte in jedem Fall frei liegt und nicht durch eine ggf. unsaubere Anlage, wie sie durch feine Schmutzpartikel auftreten kann, die Positionierung der Schneidplatte beeinträchtigt. Zweckmäßig ist bei dieser Ausgestaltung der Erfindung die starre Seitenfläche ebenfalls mit einem Ansatz versehen, so daß auch hier eine saubere Positionierung möglich ist und das Schnäbeln der Schneidplatten mit Sicherheit verhindert wird.

Eine bevorzugte Ausgestaltung der Erfindung sieht vor, daß die kreisabschnittförmige Aussparung unterhalb der Grundfläche als Sacklochbohrung ausgeführt ist. Durch diese konstruktive Maßnahme ist es möglich, durch einfaches Einbringen einer Bohrung in den Kopf des Schneidhalters die Aufnahme für die drehbare Seitenfläche einzubringen, wobei die drehbare Seitenfläche in diesem Fall als Zylinder ausgeführt ist, der an seinem sich oberhalb der Grundfläche der Ausnehmung erstreckenden Bereich eine abgefräste Fläche aufweist, die wiederum mit einem Ansatz versehen sein kann. Der Zylinder wird durch eine Fußplatte im Bereich der Grundfläche der Ausnehmung abgedeckt, wobei diese Fußplatte als Auflage für die Schneidplatte dient. Dadurch ist der Zylinder unverlierbar im Schneidhalter angeordnet, d. h. es ergibt sich nicht nur eine sehr einfache Möglichkeit, die bewegliche Seitenfläche zu fertigen, zusätzlich ist das einzusetzende Stück auch noch gegen Herausfallen und damit gegen Verlust gesichert.

Eine zweckmäßige Ausgestaltung der Erfindung sieht vor, daß die kreisabschnittförmige Aussparung eine Hinterschneidung aufweist. In diese Hinterschneidung greift das analog ausgestaltete Kreisabschnittstück ein, das also eine Scheibe mit einem am Scheibenumfang verlaufenden Schenkel darstellt. Auch durch diese Konstruktion ist gewährleistet, daß das Kreisabschnittstück sicher im Schneidhalter gelagert und geführt ist.

Beispiele von Schneidhaltern wird nachstehend anhand der Zeichnungen beschrieben :

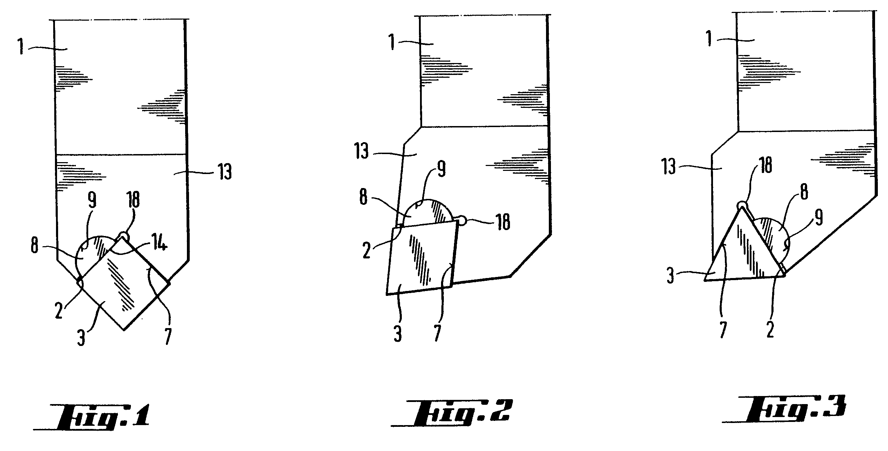

die Fig. 1 bis 10 zeigen schematische Darstellungen von Schneidhaltern, die nicht vom Anspruch 1 geschützt sind, sondern nur zum besseren Verstehen der Erfindung dienen sollen,
Fig. 11 die Draufsicht auf einen Schneidhalter für quadratische Schneidplatten im Teilschnitt mit einer bevorzugten Ausführungsform des Kreisabschnittstückes,
Fig. 12a die perspektivische Vorderansicht des Kreisabschnittstückes,
Fig. 12b die perspektivische Rückansicht des Kreisabschnittstückes.

Der Schaft (1) des Schneidwerkzeuges trägt an seinem vorderen Ende den Kopf (13), der die Ausnehmung (2) aufweist. Die Ausnehmung (2) wird durch die starre Seitenfläche (7) einseitig begrenzt. Auf der Grundfläche (6) der Ausnehmung (2) liegt die Fußplatte (4) auf und wird durch die Fußplattenschraube (5) darauf befestigt. Auf der Fußplatte (4) ist die Schneidplatte (3) angeordnet, die mit einer Umfangsfläche an dem Ansatz (10′) der starren Seitenfläche (7) anliegt und mit einer weiteren Umfangsfläche mit dem Ansatz (10) des Kreisabschnittstückes (8) in Berührung steht.

Beim Einlegen der Schneidplatte (3) in die Ausnehmung (2) wird die Schneidplatte (3) gegen die starre Seitenfläche (7) gedrückt und gleitet an dieser entlang, bis das Kreisabschnittstück (8) sich an die zweite Umfangsfläche der Schneidplatte (3) angelegt hat. Das Kreisabschnittstück (8) dreht sich dabei in der kreisabschnittförmigen Aussparung (9), bis es zu einer vollen Anlage der Sehne (14) an die Umfangsfläche der Schneidplatte (3) kommt.

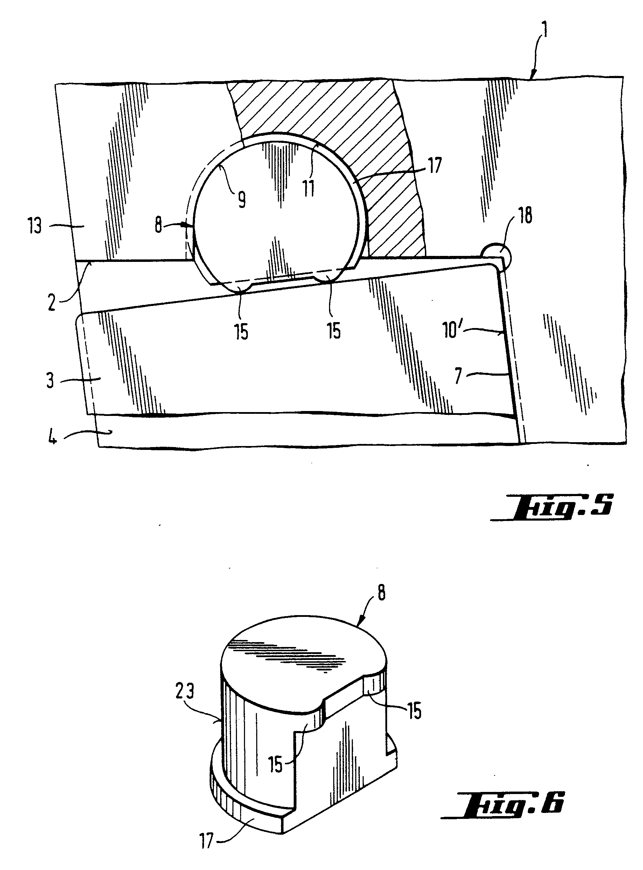

Wie in Figur 5 dargestellt, weist die kreisabschnittförmige Aussparung (9) eine Hinterschneidung (11) auf, in die der Schenkel (17) des Kreisabschnittstückes (8) eingreift. Zwei Ansätze (15) am Kreisabschnittstück (8) gewährleisten zwei punktförmige Anlagen auch für den Fall, daß die Schneidplatte (3) in diesem Kantenbereich ballig ausgeführt ist.

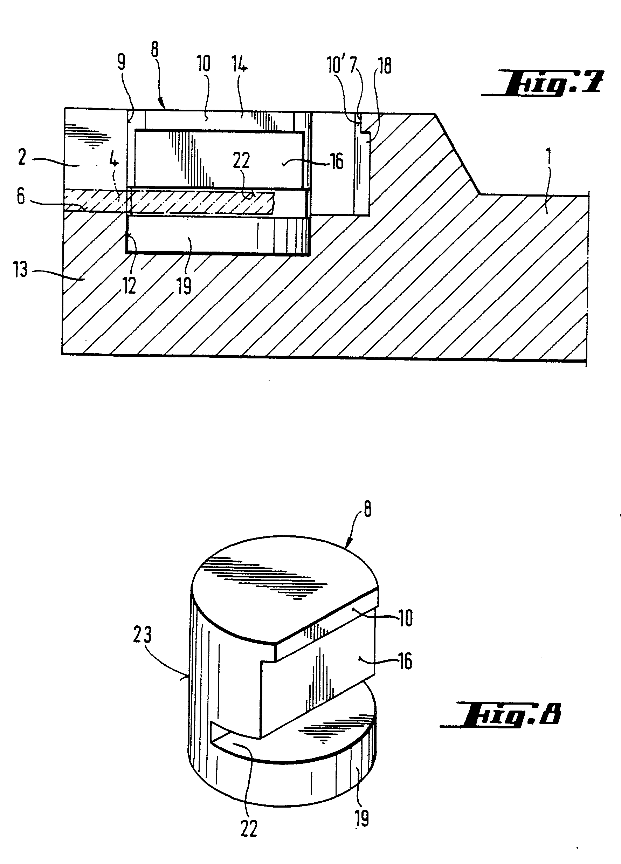

Figur 6 zeigt das perspektivisch dargestellte Kreisabschnittstück (8), das von dem Zylindermantel (24) begrenzt wird, der sich oberhalb des Schenkels (17) befindet.

Die Höhe (h1) des Kreisabschnittstückes, die auf der Sehne (14) senkrecht steht, ist größer als die Höhe (h2) der kreisabschnittförmigen Aussparung (9). Dadurch steht das Kreisabschnittstück (8) stets aus der kreisabschnittförmigen Aussparung (9) hervor.

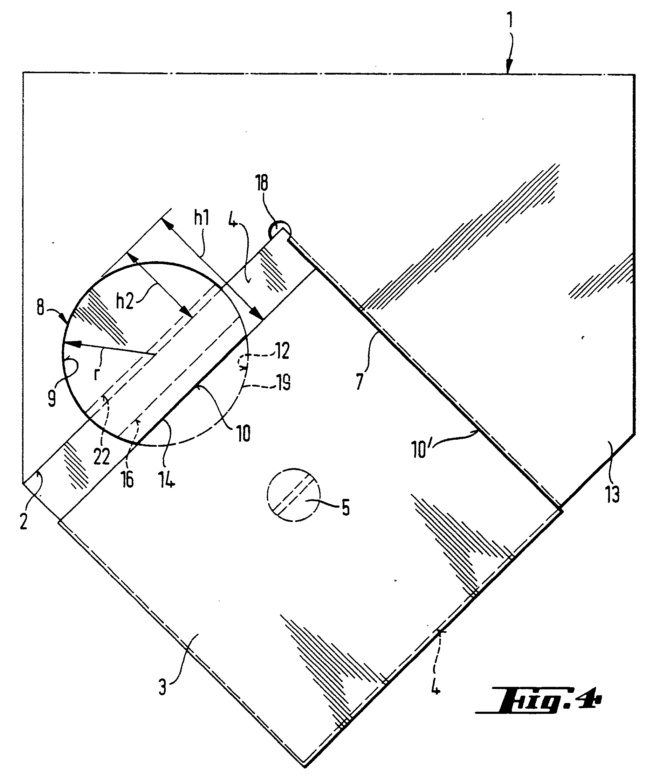

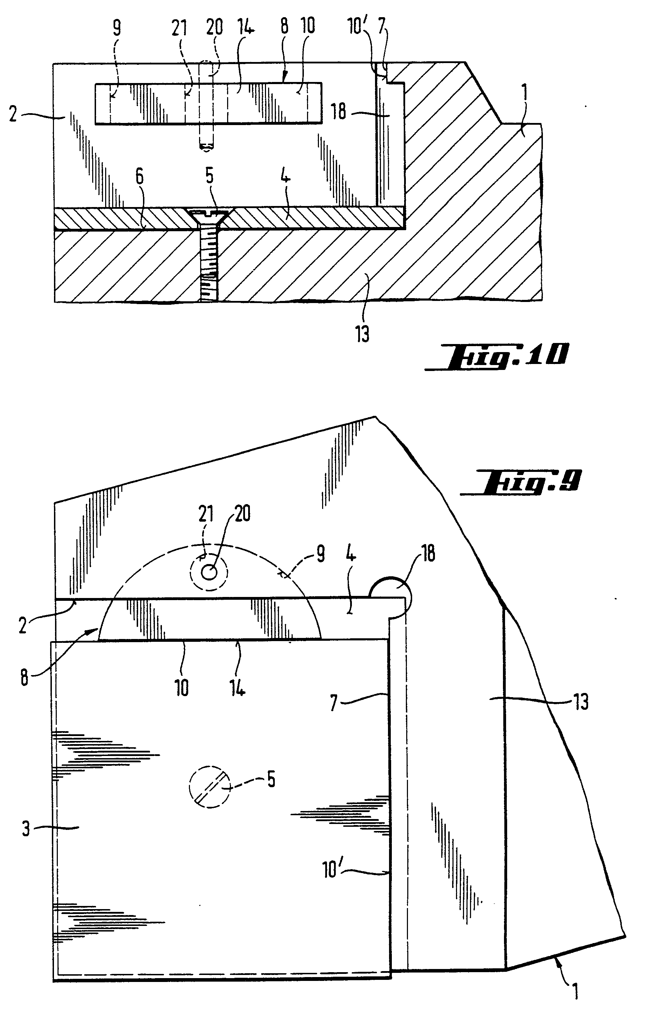

Gemäß Figuren 4, 7 und 8 ist das Kreisabschnittstück (8) als Zylinder ausgeführt, der eine abgefräste Fläche (16) aufweist, die mit einem Ansatz (10) versehen ist. Der kreisförmige Bereich (19) dieses Zylinders befindet sich dabei im Sackloch (12) und wird teilweise durch die Fußplatte (4) abgedeckt. Unter der abgefrästen Fläche (16) ist eine Nut (22) angeordnet, so daß auch bei aufgeschraubter Fußplatte (4) eine begrenzte Drehung des Zylinders möglich ist.

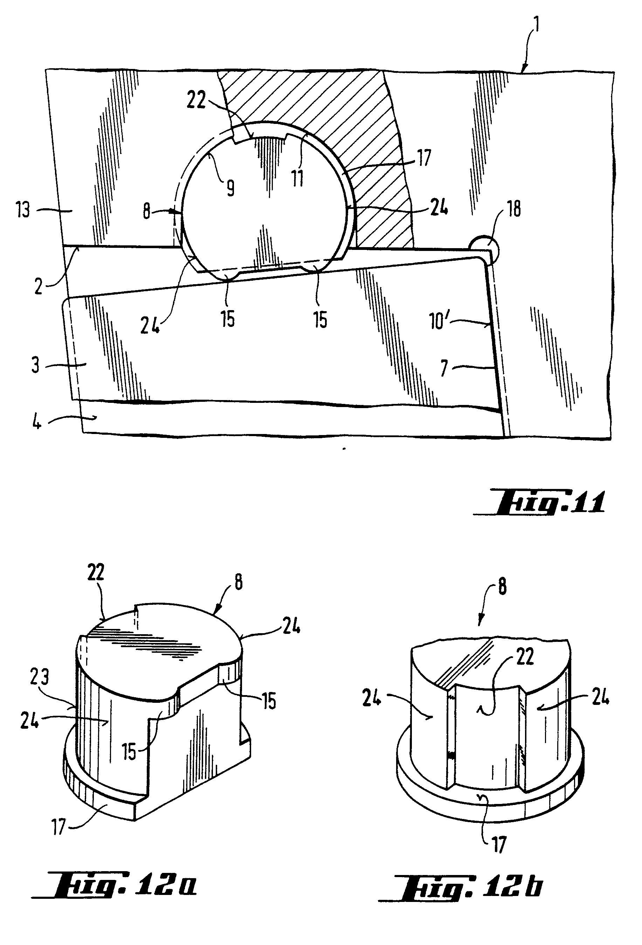

In den Figuren 9 und 10 ist in der kreisabschnittförmigen Aussparung (9) das eingesetzte Kreisabschnittstück (8) als Scheibenfeder dargestellt. Diese Scheibenfeder ragt über die seitliche Begrenzung der kreisabschnittförmigen Aussparung (9) hinaus, um eine Verdrehung zu ermöglichen, und ist durch den Stift (20), der die Bohrung (21) in der Scheibenfeder, d. h. dem Kreisabschnittstück (8), durchgreift, gegen Herausfallen gesichert. Der Durchmesser der Bohrung (21) beträgt dabei ein mehrfaches des Durchmessers des Stiftes (20), um eine Bewegung der Scheibenfeder zu ermöglichen.

In den Figuren 11, 12a und 12b ist ein Kreisabschnittstück (8) dargestellt, das mit einer rückwärtigen Freifläche (22) versehen ist. Durch die Freifläche (22) wird der Zylindermantel (23) unterteilt, so daß nur zwei Zylinderrestflächen (24) stehen bleiben. Die Berührung der Mantelfläche (23) mit der kreisabschnittförmigen Aussparung (9) wird dadurch erheblich verringert, gleichzeitig aber durch die Bemessung der Breite der Freifläche (22) sichergestellt, daß auch bei der größtmöglichen Drehbewegung des Kreisabschnittstückes (8) im Schaft (1) immer noch eine Anlage der beiden Zylinderrestflächen (24) an die kreisabschnittförmige Aussparung (9) erreicht wird.

## Patentansprüche

1. Schneidhalter für Schneidplatten (3), insbesondere Wendeschneidplatten (3), der aus einem Schaft (1) und einer in dessen Kopf (13) eingebrachten Ausnehmung (2) zur Aufnahme der Schneidplatte (3) besteht, wobei die Ausnehmung (2) eine Grundfläche (6) und zwei im Winkel zueinander angeordnete Seitenflächen (7, 8) zur Positionierung der Schneidplatte (3) aufweist, eine der beiden Seitenflächen (8) gegenüber der anderen (7) drehbar angeordnet und durch ein Kreisabschnittstück (8) gebildet ist, das in einer kreisabschnittförmigen Aussparung (9) des Kopfes (13) angeordnet ist, dadurch gekennzeichnet, daß der Zylindermantel (23) des Kreisabschnittstückes (8) eine Freifläche (22) aufweist, die gegenüber seiner Sehne (14) angeordnet ist.

2. Schneidhalter nach Anspruch 1, dadurch gekennzeichnet, daß das Kreisabschnittstück (8) mit einem Ansatz (10) versehen ist.

3. Schneidhalter nach einem der Ansprüche 1 oder 2, dadurch gekennzeichnet, daß die kreisabschnittförmige Aussparung (9) eine Hinterschneidung (11) aufweist.

4. Schneidhalter nach einem der Ansprüche 1 bis 3, dadurch gekennzeichnet, daß die kreisabschnittförmige Aussparung (9) unterhalb der Grundfläche (6) als Sacklochbohrung (12) ausgeführt ist.

5. Schneidhalter nach einem der Ansprüche 1 bis 4, dadurch gekennzeichnet, daß die Sehne (14) des Kreisabschnittstückes (8) mit zwei Ansätzen (15) versehen ist.

**Claims**

1. Cutter holder for cutting plates (3), especially rotatable cutting plates (3), which comprises a shaft (1) and a recess (2), made in the head (13) of the shaft, for accommodating the cutting plate (3), the recess (2) having a base surface (6) and two lateral surfaces (7, 8), arranged at an angle to each other, for positioning the cutting plate (3), one of the two lateral surfaces (8) being arranged in such a manner as to be rotatable relative to the other (7) and being formed by a circularsegment portion (8) arranged in a circular-segment-shaped recess (9) in the head (13), characterised in that the cylindrical surface (23) of the circular-segment portion (8) has a free surface (22) arranged opposite its chord (14).

2. Cutter holder according to claim 1, characterised in that the circular-segment portion (8) is provided with a projection (10).

3. Cutter holder according to claim 1 or claim 2, characterised in that the circular-segment-shaped recess (9) has an undercut (11).

4. Cutter holder according to one of claims 1 to 3, characterised in that the circular-segment-shaped recess (9) is made in the form of a blind drilled hole (12) below the base surface (6).

5. Cutter holder according to one of claims 1 to 4, characterised in that the chord (14) of the circularsegment portion (8) is provided with two projections (15).

**Revendications**

1. Porte-plaquette pour plaquettes de coupe amovibles (3), en particulier pour plaquettes indexables (3), composé d'un corps (1) et d'un évidement (2) ménagé dans la tête (13) du corps pour recevoir la plaquette de coupe (3), l'évidement (2) présentant une surface de base (6) et deux surfaces latérales (7, 8) placées l'une par rapport à l'autre selon un angle et destinées au positionnement de la plaquette de coupe (3), l'une des deux surfaces latérales (8) étant disposée mobile en rotation par rapport à l'autre (7) et étant formée par une pièce (8) en forme de segment de cercle qui est placée dans une échancrure (9) en forme de segment de cercle de la tête (13), caractérisé en ce que l'enveloppe cylindrique (23) de la pièce (8) en forme de cercle présente une surface de dégagement (22) située en face de sa corde (14).

2. Porte-plaquette selon la revendication 1, caractérisé en ce que la pièce (8) en forme de segment de cercle est munie d'une saillie (10).

3. Porte-plaquette selon l'une quelconque des revendications 1 ou 2, caractérisé en ce que l'échancrure (9) en forme de segment de cercle présente une contre-dépouille (11).

4. Porte-plaquette selon l'une quelconque des revendications 1 à 3, caractérisé en ce que l'échancrure (9) en forme de segment de cercle est réalisée sous forme de trou borgne (12) au-dessous de la surface de base (6).

5. Porte-plaquette selon l'une quelconque des revendications 1 à 4, caractérisé en ce que la corde (14) de la pièce (8) en forme de segment de cercle est munie de deux saillies (15).

**Fig.1**

**Fig.2**

**Fig.3**

Fig.4

Fig. 5

Fig. 6

**Fig.7**

**Fig.8**

Fig.10

Fig.9

**Fig. 11**

**Fig. 12a**

**Fig. 12b**